# EUROPEAN PATENT SPECIFICATION

(11) **EP 2 447 142 B1**
(45) Date of publication and mention of the grant of the patent: **07.08.2013**
(21) Application number: 11250868.4
(22) Date of filing: 21.10.2011
(51) Int. Cl.: B62J 17/04

(54) **Saddle riding type vehicle**
Sattelfahrzeug
Véhicule de type à selle

(30) Priority: 29.10.2010 JP 2010244308
(43) Date of publication of application: 02.05.2012
(73) Proprietor: Honda Motor Co., Ltd., Minato-ku Tokyo Miyazaki 107-8556 (JP)
(72) Inventor: Muto, Noriyuki, Wako-shi, Saitama 351-0193 (JP); Kawatani, Shinji, Wako-shi, Saitama 351-0193 (JP); Doi, Takashi, Wako-shi, Saitama 351-0193 (JP)
(74) Representative: Stevens, Jason Paul

(56) References cited:
- JP-A- 2002 284 073
- JP-U- H04 104 086

## Description

The present invention relates to a saddle riding type vehicle (such as a motorcycle or the like) comprising an improved screen mounting structure.

Japanese Patent No. 4119209 (see in particular Figs. 6 and 13A) shows a known saddle riding type vehicle which includes a screen mounting structure disposed at a front section of the vehicle, in which a screen is vertically movably mounted.

As shown in Figs. 6 and 13 of Japanese Patent No. 4119209, a mounting stay 20 (to use the reference numerals of Japanese Patent No. 4119209) on which the screen can be mounted is disposed at the front section of the vehicle. Nuts 221, 222 are welded to the mounting stay 20.

A windscreen 4 (hereinafter referred to simply as "screen 4") may be mounted on the mounting stay 20 as follows. Specifically, the screen 4 is brought into abutment with the mounting stay 20. Bolts 10A, 10B are inserted into mounting holes 9A, 9B made in the screen 4 and then the bolts 90A, 10B are threaded into the nuts 221, 222.

When a downward load of a predetermined value or more is applied to the screen 4, the downward impact force can be lessened by letting the screen 4 resist tightening forces of the upper and lower bolts 10A, 10B to thereby move downwardly.

The mounting holes 9A, 9B made in the screen 4 have an elongate slot-like shape. To improve the appearance of the vehicle, these slot-like mounting holes 9A, 9B are covered by a cover 35 included in the screen 4.

The longer the mounting holes 9A, 9B, the larger the cover 35. The larger the cover 35, the more the shape of the cover 35 affects design of the screen 4. In designing the screen 4, therefore, consideration needs to be given to the cover 35, so that there is a concern about a reduced degree of freedom in design of the screen 4 itself.

An alternative screen mounting structure is shown in JP 2002-284073. This document discloses a saddle riding type vehicle comprising a screen mounting structure with: a screen stay, disposed at a front portion of the vehicle, for supporting a screen, the screen stay including a supporting seat portion for supporting the screen, the supporting seat portion having a clip member attached thereon, the clip member and the screen being fastened together with a bolt to thereby mount the screen on the screen stay, wherein: the supporting seat portion has a hole portion through which the bolt is passed; and the clip member includes: a front plate portion abutting on a front surface of the supporting seat portion; a rear plate portion abutting on a rear surface of the supporting seat portion, the front plate portion and the rear plate portion having a hole portion accepting the bolt that penetrates therethrough; and a nut at a rear surface of the rear plate portion.

It is an object of at least the preferred embodiments of the present invention to provide a saddle riding type vehicle comprising a screen mounting structure, that allows a screen to be downwardly moved when a predetermined load or more is applied to the screen, while enhancing a degree of freedom in design of the screen.

According to one aspect of the present invention, the vehicle with the screen mounting structure is characterized in that the rear plate portion extends from a lower portion of the front plate portion, and in that the supporting seat portion also has a groove portion extending from the hole portion to a lower side of the supporting seat portion so as to open downwardly, so that when a load of a predetermined value or more is applied downwardly to the screen, the screen is adapted to be moved downwardly from the groove portion to go beyond the lower side so as to be dismounted from the screen stay, with the bolt and the clip member integrated with the screen.

In this aspect of the present invention, the clip member is mounted such that the supporting seat portion is clamped between the front plate portion and the rear plate portion. The nut is fixedly attached to the rear surface of the rear plate portion. The bolt is inserted in the hole portion in the clip member and the nut fixed to the rear surface of the rear plate portion at the end portion of the hole portion is then tightened.

When the bolt is tightened, a gap between a head of the bolt and the nut fixed to the rear surface is narrowed, so that the supporting seat portion is clamped, which results in the screen being secured to the supporting seat portion.

When a predetermined load or more is applied to the screen downwardly, the screen becomes downwardly movable from the groove portion in the screen stay to go beyond the lower side, with the bolt and the clip member Integrated with the screen.

Conventionally, in the screen mounting structure allowing the screen to be downwardly moved, the screen has an elongate slot made therein and a bolt is passed through an upper end of the slot to fix the screen in the screen stay for possible application of an external force. This structure requires that the slot be formed in the screen as a fastening portion. To maintain appearance, the slot is covered in, for example, a cover member.

However, in this aspect of the present invention, the screen stay has the groove portion that opens downwardly. The clip member is disposed in this groove portion and the screen is thereby fastened to the supporting seat portion of the screen stay.

In the arrangement as described above, the screen can be moved downwardly without having to make a slot-like mounting hole in the screen. Not requiring a slot leads to an enhanced degree of freedom in design of the screen. In addition, good appearance of the screen mounting portion and surrounding areas can be achieved without having to incorporate, for example, a cover member for covering the slot.

Preferably, the clip member further comprises a collar member disposed so as to penetrate through the front plate portion and the rear plate portion; and the collar member is an elastic body and includes a flange portion abutting on the screen, a collar main unit extending from the flange portion toward a side of the screen stay, a bolt hole penetrating through the collar main unit and the flange portion and accepting the bolt inserted therethrough, and said nut is buried in the collar main unit at an end portion of the bolt hole and accepting the bolt screwed therein.

Preferably, the clip member includes a cover portion, disposed at a lower portion thereof, for covering the lower side of the supporting seat portion.

With this arrangement, the groove portion in the screen stay is covered in the cover portion of the clip member, and the lower side of the supporting seat portion is also covered in the cover portion. There is therefore no likelihood that appearance of the screen stay and the area around it will be impaired. This contributes to better appearance of the vehicle. In addition, a lower portion of the collar main unit can be protected.

Preferably, the screen stay includes a stay main unit formed of a resin and a stay base formed of a metal and joined to the stay main unit from a rearward direction of the vehicle; the stay main unit includes a first boss portion protruding forwardly of the vehicle and having an opening which exposes a front portion of the stay base and a second boss portion protruding forwardly of the vehicle at a position upward or downward of the first boss portion; the supporting rest portion includes a first supporting seat portion and a second supporting seat portion; and the second boss portion and the front portion of the stay base together form the second supporting seat portion.

With this arrangement, supporting stiffness of the screen is ensured by the stay base, and the second boss portion disposed on the stay main unit can support the screen so as to prevent the screen from being tilted.

Additionally, the metal stay base is joined to the stay main unit from the rearward direction of the vehicle. Specifically, the stay main unit is joined to the metal stay base from the forward direction of the vehicle, so that the stay main unit covers the stay base. Because the stay main unit that covers the stay base is formed of a resin, the stay main unit can be flexibly shaped as compared with the stay base. This enhances a degree of freedom in setting its design accordingly.

In a further preferred form, the first boss portion has a front surface, the front surface having a shouldered portion recessed rearwardly in the vehicle; the first supporting seat portion is disposed on a surface recessed by the shouldered portion; and a front surface of the front plate portion that forms part of the clip member is substantially flush with the front surface of the first boss portion.

The front surface of the first boss portion included in the stay main unit is disposed so as to be substantially flush with the front surface of the clip member. As compared with an arrangement in which a step is formed between the front surface of the clip member and the front surface of the first boss portion, the clip member can be made less noticeable, which allows appearance of the vehicle to be improved.

Preferably, a meter for displaying a vehicle running condition is disposed rearwardly of the screen, and a meter cover is integrally formed with an upper portion of the screen stay forwardly of the meter.

As the screen stay also serves as the meter cover, this contributes to a reduced number of parts used.

Preferably, the clip member includes a locking protrusion to abut on the lower side of the supporting seat portion and thereby prevent the clip member from being rotated when the bolt is tightened. This enhances workability involved in tightening.

Preferred embodiments of the invention will now be described by way of example only and with reference to the accompanying drawings, in which:
Fig. 1 is a left side elevational view showing a motorcycle according to an embodiment of the present invention;
Fig. 2 is an exploded front elevational view showing a mounting structure of a screen;
Fig. 3 is an exploded perspective view showing mounting of a clip member onto a supporting seat portion of a screen stay;
Fig. 4(a) is a rear elevational view showing the clip member, Fig. 4(b) is a cross-sectional view taken a long line (b)-(b) of Fig. 4(a), and Fig. 4(c) is a front elevational view showing the clip member;
Fig. 5 is a front elevational view showing a stay base mounted with a meter, from which a meter cover is removed;
Fig. 6 is a rear elevational view showing a stay main unit as a component of the screen stay;
Fig. 7 is a side elevational view showing the screen stay (the stay base and the stay main unit) mounted on a head pipe;
Figs. 8(a) and 8(b) are illustrations showing a structure of a collar member and operation of the mounting structure of the screen including the collar member;
Fig. 9 is a front elevational view showing the mounting structure of the screen;
Fig. 10 is a cross-sectional view showing a main section, illustrating the mounting structure of the screen;
Fig. 11 is an enlarged view showing part 11 of Fig. 90;
Figs. 12(a) and 12(b) are illustrations showing operation when a downward load is applied to the screen; and
Fig. 13 is an illustration showing another embodiment of what is shown in Fig. 11.

Specific embodiments to which the present invention is applied will be described below. In the drawings and embodiments, expressions indicating directions including "upper," "lower," "front," "rear," "left," and "right" mean the same directions as those viewed by a rider seated on a motorcycle. The drawings should be viewed so that the reference numerals can be read.

A first embodiment of the present invention will be described with reference to the drawings.

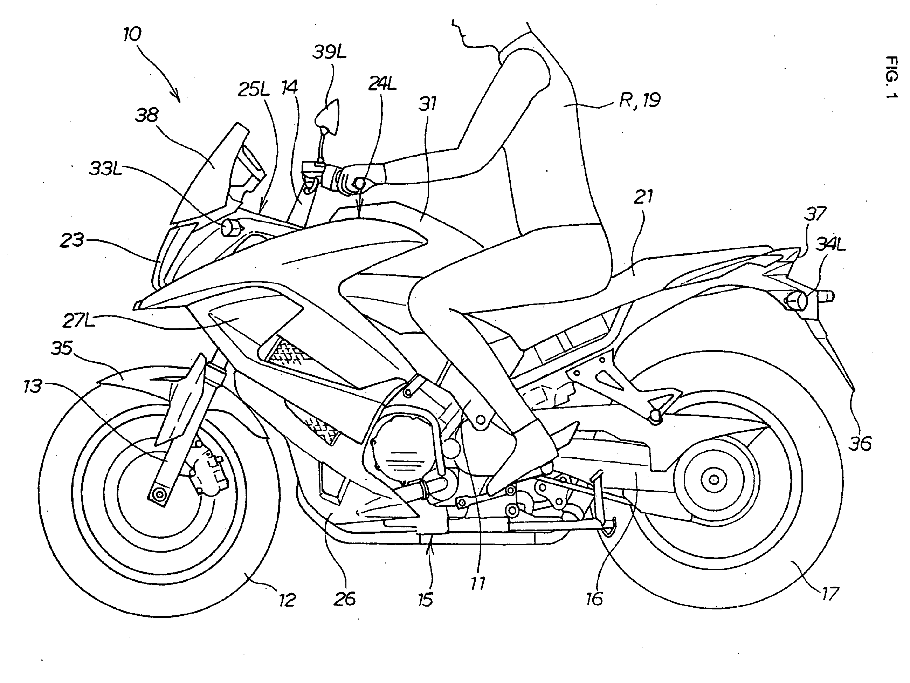

Referring to Fig. 1, a motorcycle 10 is a saddle riding type vehicle. The motorcycle 10 includes, as main elements thereof, a vehicle body frame 11, a fork member 13, a handlebar 14, an engine 15, a swing arm 16, and a rear wheel 17. Specifically, the fork member 13, disposed at a front section of the vehicle body frame 11, steerably supports a front wheel 12. The handlebar 14, which is mounted on the fork member 13 and onto which a rider R holds, allows the vehicle to be steered. The engine 15 is suspended on the vehicle body frame 11. The swing arm 16 is extended rearwardly along the vehicle from the vehicle body frame 11. The rear wheel 17 is mounted at a rear end portion of the swing arm 16 and is driven by the engine 15. The motorcycle 10 further includes a seat 21 that extends from an intermediate portion to a rear portion of the vehicle body and on which occupants 19 including the rider R sit.

A headlight, a cover member, and other parts covering the outside of the vehicle will be described.

The motorcycle 10 further includes a headlight 23, left and right side covers 24L, 24R (only the left side cover on a proximal side, denoted by reference numeral 24L, is shown), and left and right upper side cowls 25L, 25R (only the left upper side cowl on the proximal side, denoted by reference numeral 25L, is shown). Specifically, the headlight 23 is disposed forwardly of the vehicle body frame 11. The left and right side covers 24L, 24R are disposed on either side of the vehicle body frame 11 at positions rearward of the headlight 23. The left and right upper side cowls 25L, 25R are disposed upwardly of the left and right side covers 24L, 24R so as to be continuous therewith.

Left and right lower side covers 27L, 27R (only the left lower side cover on the proximal side, denoted by reference numeral 27L, is shown) are disposed downwardly of the left and right side covers 24L, 24R, respectively. An under cover 26 is disposed downwardly of the left and right lower side covers 27L, 27R.

A fuel tank 31 is disposed inwardly of the left and right side covers 24L, 24R in the direction of width of the vehicle. Part of the fuel tank 31 is covered by the left and right side covers 24L, 24R when viewed from the side of the vehicle. The fuel tank 31 is mounted on the vehicle body frame 11 at a position rearward of the handlebar 14.

Left and right front direction indicators 33L, 33R (only the left front direction indicator on the proximal side, denoted by reference numeral 33L, is shown) are mounted on the left and right upper side cowls 25L, 25R so as to protrude outwardly in the direction of width of the vehicle. In Fig. 1, reference numeral 35 denotes a front fender.

A rear fender 36 is mounted upwardly of the rear wheel 17 and downwardly of the seat 21. A taillight 37 is mounted at a rear portion of the rear fender 36. Left and right rear direction indicators 34L, 34R (only the left rear direction indicator on the proximal side, denoted by reference numeral 34L, is shown) are mounted on the rear fender 36 so as to protrude outwardly in the vehicle width direction.

A screen 38 as a windshield is disposed upwardly of the headlight 23.

Rear view mirrors 39L, 39R (only the mirror on the proximal side, denoted by reference numeral 39L, is shown) are disposed on the handlebar 14.

A mounting structure of the screen will be described in detail below.

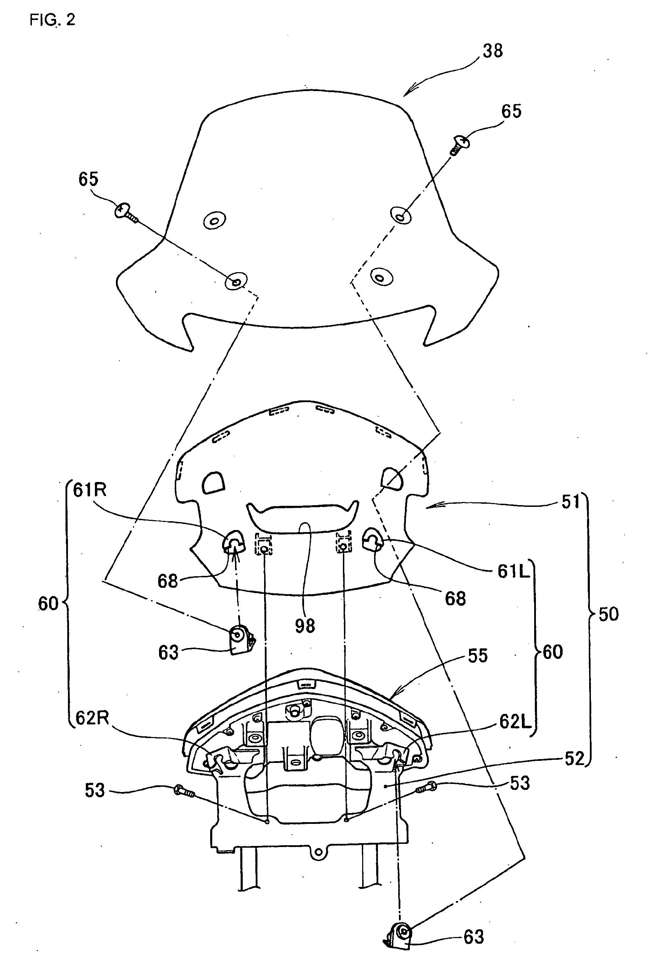

Referring to Fig. 2, a screen stay 50 for supporting the screen 38 is disposed rearwardly of the screen 38.

The screen stay 50 includes a stay main unit 51 and a stay base 52. The stay main unit 51 is formed of a resin. The stay base 52 is formed of a metal and is joined to the stay main unit 51 from a rearward direction of the vehicle. The stay main unit 51 is attached to the stay base 52 via first stay bolts 53. A meter unit 55 is mounted on an upper end portion of the stay base 52.

The stay main unit 51 has left and right first supporting seat portions 61 L, 61 R for supporting the screen 38. Clip members 63, 63 are fitted to the left and right first supporting seat portions 61 L, 61 R, respectively, so that the clip members 63, 63 can be fastened to the screen 38 with bolts 65, 65.

The stay base 52 has left and right second supporting seat portions 62L, 62R for supporting the screen 38. The clip members 63, 63 are fitted to the left and right second supporting seat portions 62L, 62R, respectively, so that the clip members 63, 63 can be fastened to the screen 38 with the bolts 65, 65.

Specifically, the screen stay 50 including the stay main unit 51 and the stay base 52 is disposed at the front section of the vehicle. The screen stay 50 has supporting seat portion 60 for supporting the screen 38. The clip members 63, 63 are fitted to the supporting seat portion 60. The clip members 63, 63 and the screen 38 are fastened together with the bolts 65, 65, which mounts the screen 38 on the screen stay 50. The screen stay 50 includes the first supporting seat portions 61 L, 61 R and the second supporting seat portions 62L, 62R.

The clip member interposed between the supporting seat portion and the bolt will be described below.

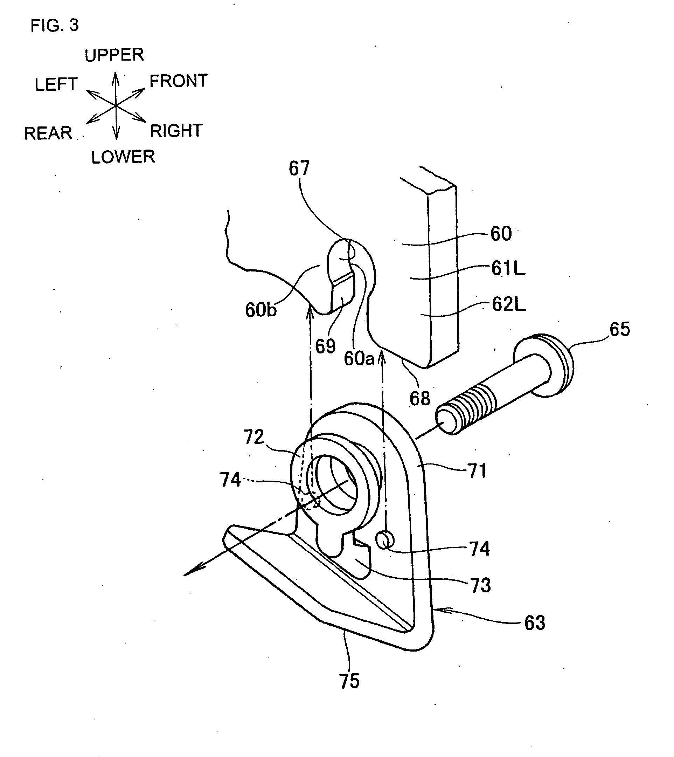

Referring to Fig. 3, the supporting seat portion 60 includes a hole portion 67 and a groove portion 69. Specifically, the bolt 65 is passed through the hole portion 67. The groove portion 69 extends from the hole portion 67 to a lower side 68 of the supporting seat portion.

As described earlier, the supporting seat portion 60 includes the second supporting seat portion 62L which the stay base 52 has and the first supporting seat portion 61 L which the stay main unit 51 has. The first supporting seat portion 61 L and the second supporting seat portion 62L have an identical shape. The clip members 63 are of the same shape and can be used in common.

Note that the first supporting seat portion 61 R and the second supporting seat portion 62R, which are disposed on the right-hand side of the vehicle, opposite to the first supporting seat portion 61 L and the second supporting seat portion 62L respectively, are structured identically to the first supporting seat portion 61 L and the second supporting seat portion 62L, except for orientation, and a detailed description of them will be omitted.

A structure of the clip member fitted to the supporting seat portion will be described below.

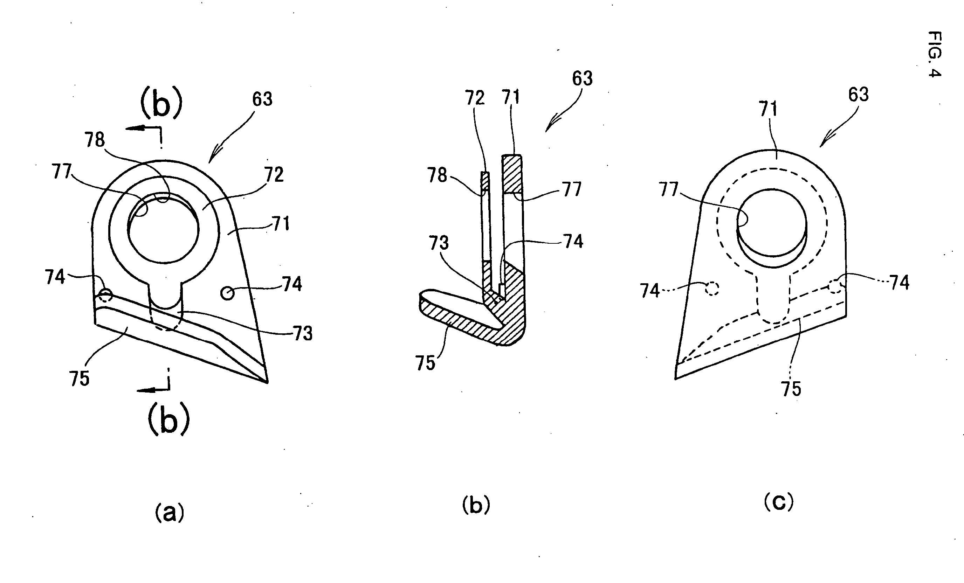

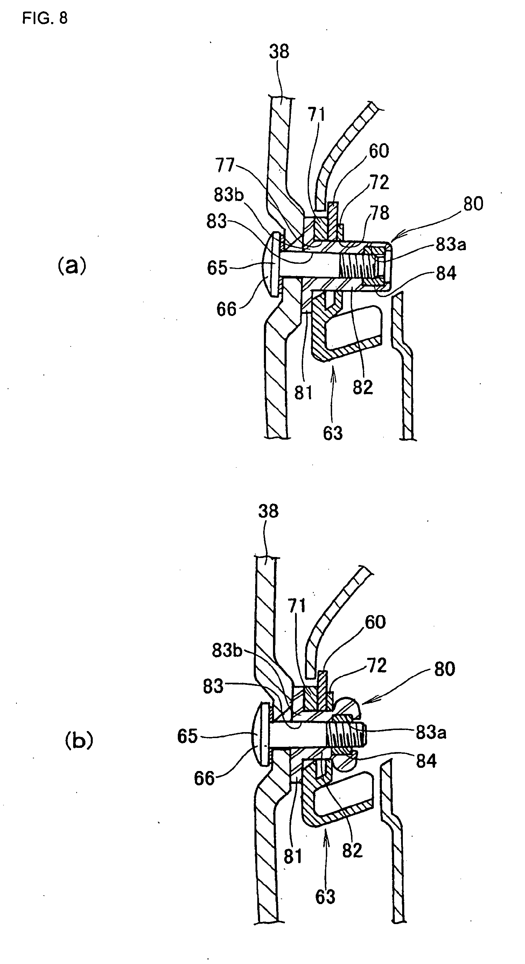

Referring to Figs. 4(a) to 4(c), the clip member 63 includes a front plate portion 71, a rear plate portion 72, two locking protrusions 74, 74, a connecting portion 73, and a cover portion 75. Specifically, the rear plate portion 72 is disposed rearwardly of, and in parallel with, the front plate portion 71. The locking protrusions 74, 74 are disposed at lower portions of the front plate portion 71 in a protruding condition. The connecting portion 73 extends forwardly from the rear plate portion 72 to be joined with a lower end of the front plate portion 71. The cover portion 75 extends obliquely upwards toward the rear from a lower end of the front plate portion 71 at a position downward of the connecting portion 73. The front plate portion 71 and the rear plate portion 72 have a front hole 77 and a rear hole 78 formed therein, respectively. The front hole 77 and the rear hole 78 allow a collar member to be described later (reference numeral 80 in Figs. 8(a) and 8(b)) to be passed therethrough. The rear plate portion 72 has a smaller wall thickness, and is smaller in size, than the front plate portion 71.

A mounting relationship of each part of the clip member relative to the supporting seat portion 60 will be described below.

Referring back to Fig. 3, the clip member 63 is fitted onto the supporting seat portion 60 as follows. Specifically, the front plate portion 71 of the clip member 63 is brought into abutment with a front surface 60a of the supporting seat portion; the rear plate portion 72 which extends from the lower portion of the front plate portion 71 is brought into abutment with a rear surface 60b of the supporting seat portion; and the two locking protrusions 74, 74 are brought into abutment with the lower side 68 of the supporting seat portion.

The locking protrusions 74, 74 of the clip member 63 function to abut on the lower side 68 of the supporting seat portion and thereby prevent the clip member 63 from rotating with the bolt 65 when the bolt 65 is tightened, which enhances workability involved in tightening.

The cover portion 75 disposed at the lower portion of the clip member 63 covers the lower side 68 of the first supporting seat portion 61 L and the lower side 68 of the second supporting seat portion 62L.

An upper structure of the stay base in a condition in which the stay main unit is not mounted will be described below.

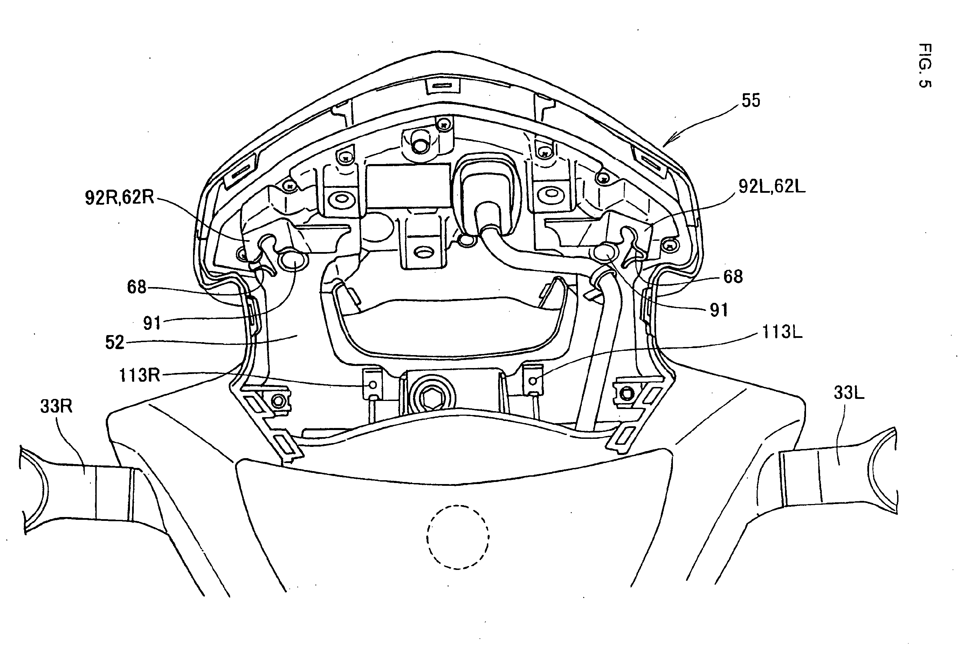

Referring to Fig. 5, the stay base 52 has an upper portion shaped substantially into a letter C opening upwardly in a vehicle front view. The meter unit 55 is placed crosswise on the substantially C-shaped upper end portion of the stay base 52, and is fastened to the stay base 52 with fastening screws 91, 91 installed from a downward direction.

The stay base 52 includes sub-stays 92L, 92R formed of a metal, disposed on either crosswise side near the upper end portion thereof. The sub-stays 92L, 92R serve as the second supporting seat portions 62L, 62R. The second supporting seat portions 62L, 62R support the screen 38.

The stay main unit mounted on the stay base will be described below.

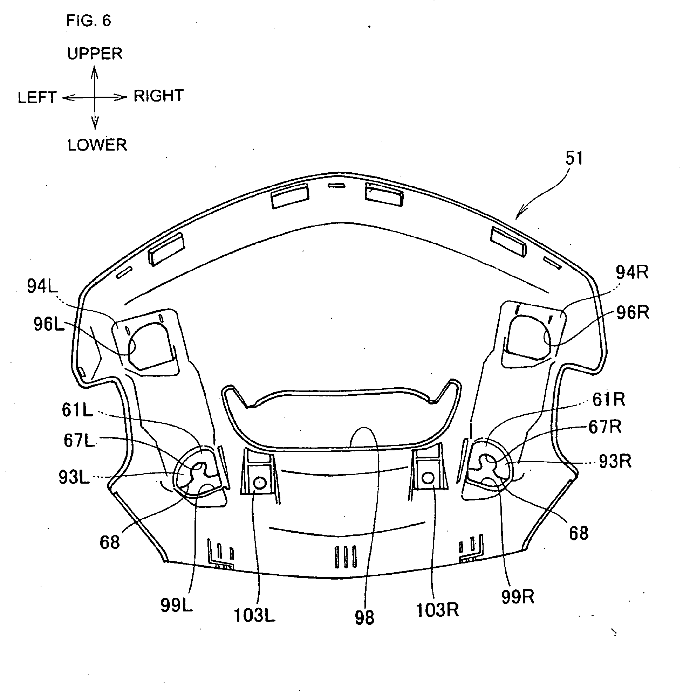

Fig. 6 shows the stay main unit 51 as viewed from a rearward side of the vehicle. Fig. 6 shows that first boss portions 93L, 93R including the first supporting seat portions 61 L, 61 R and second boss portions 94L, 94R including the second supporting seat portions 62L, 62R protrude forwardly of the vehicle, specifically, toward the back side of Fig. 6.

The first boss portions 93L, 93R protruding forwardly of the vehicle have first hole portions 67L, 67R, respectively. The second boss portions 94L, 94R protruding forwardly of the vehicle, which are disposed upwardly of the first boss portions 93L, 93R, have second hole portions 96L, 96R, respectively.

The second hole portions 96L, 96R have upper portions that are shaped into an arch so that the second supporting seat portions 62L, 62R disposed on the stay base (reference numeral 52 in Fig. 2) can face and be exposed. The first hole portions 67L, 67R form part of the first supporting seat portions 61 L, 61 R, and have upper portions with a Ω-shaped profile. In Fig. 6, reference numeral 98 denotes an opening portion.

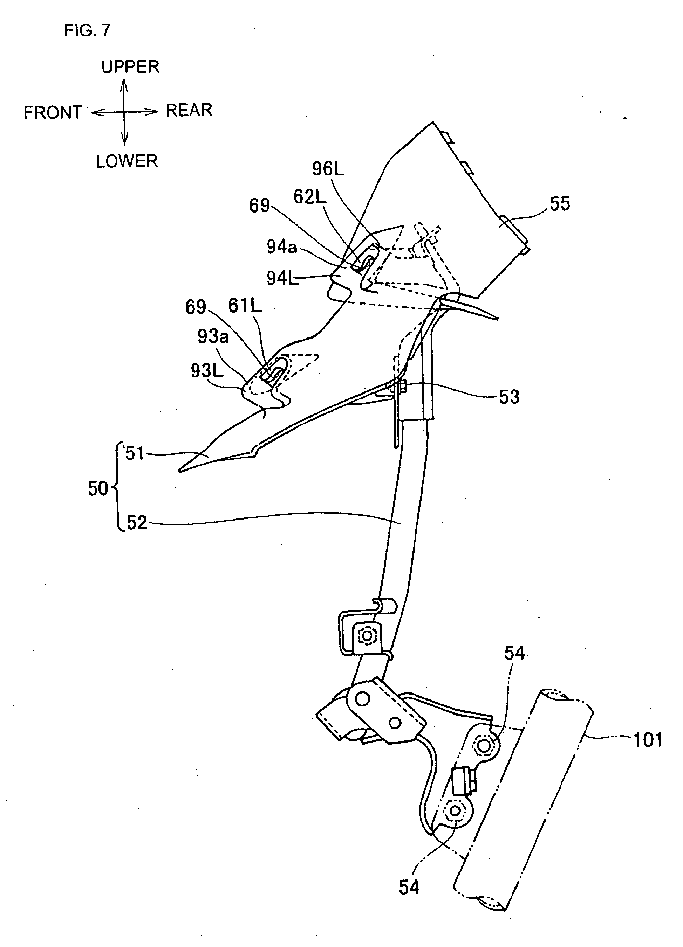

Referring to Fig. 7, the first boss portions 93L, 93R (only the left first boss portion on the proximal side, denoted by reference numeral 93L, is shown) and the second boss portions 94L, 94R (only the left second boss portion on the proximal side, denoted by reference numeral 94L, is shown), both protruding forwardly of the vehicle, are formed on the stay main unit 51.

The first supporting seat portions 61 L, 61 R (only the left first supporting seat portion on the proximal side, denoted by reference numeral 61 L, is shown) are formed on the first boss portions 93L, 93R. The second hole portions 96L, 96R (only the left second hole portion on the proximal side, denoted by reference numeral 96L, is shown) formed in the second boss portions 94L. 94R are disposed at positions at which they face the second supporting seat portions 62L, 62R (only the left second supporting seat portion on the proximal side, denoted by reference numeral 62L, is shown) disposed at front portions of the stay base 52 Specifically, the front portion of the stay base 52 is exposed at the second hole portions 96L, 96R. The supporting seat portion 60 that supports the screen (reference numeral 38 in Fig. 2) is formed to Include the sub-stays 92L, 92R disposed as an adjunct on the front portion of the stay base 52 and the second boss portions 94L, 94R disposed on the stay main unit 51. Specifically, the supporting seat portion 60 is disposed on different members.

Preferring also to Fig. 6, the first boss portions 93L, 93R protrude forwardly of the vehicle and the first hole portions 67L, 67R include open portions 99L, 99R, respectively, opening downwardly.

A structure for mounting the stay main unit on the stay base will be described below.

The stay base 52 is mounted on a head pipe 101 as a component of the vehicle body frame 11 via second stay bolts 54, 54. The stay main unit 51 is mounted on an upper portion of the stay base 52 via the first stay bolts 53, working from the forward to rearward direction of the vehicle.

Specifically, the stay main unit 51 has left and right mounting seat portions 103L, 103R disposed inwardly of the second boss portions 94L, 94R in the direction of width of the vehicle The left and right mounting seat portions 103L, 103R are aligned with left and right supporting seat portions 113L, 113R disposed on the stay base 52. The stay main unit 51 is thereby attached to the stay base 52 via the first stay bolts 53, 53.

A structure of the collar member included in the clip member, and the like, will be described below.

Referring to Fig. 8(a), the clip member 63 includes a collar member 80 that is mounted so as to penetrate through the front hole 77 and the rear hole 78 in the front plate portion 71 and the rear plate portion 72, respectively.

The collar member 80 is an elastic body (made, for example, of rubber). The collar member 80 includes a flange portion 81, a tubular collar main unit 82, a bolt hole 83, and a nut 84. Specifically, the flange portion 81 abuts on the screen 38. The collar main unit 82 extends from the flange portion 81 toward the side of the screen stay. The bolt hole 83 is formed so as to penetrate through the collar main unit 82 and the flange portion 81. The bolt 65 is passed through the bolt hole 83. The nut 84 is buried in the collar main unit 82 at an end portion 83a, which is opposite to an end portion 83b of the bolt hole 83 at which the flange portion 81 is disposed. The bolt 65 is screwed into the nut 84.

Referring to Fig. 8(b), when the bolt 65 is screwed in, the distance between the nut 84 and a head 66 of the bolt 65 buried in the collar main unit 82 (or the flange portion 81) becomes shorter. Further, a portion of the collar main unit 82 near where the nut 84 is buried expands in a direction perpendicular to an axis of the bolt 65, so that the clip member 63 and the supporting seat portion 60 are thereby clamped. This mounts the screen 38 on the supporting seat portion 60.

A condition in which the screen is mounted on the supporting seat portion of the screen stay will be described below.

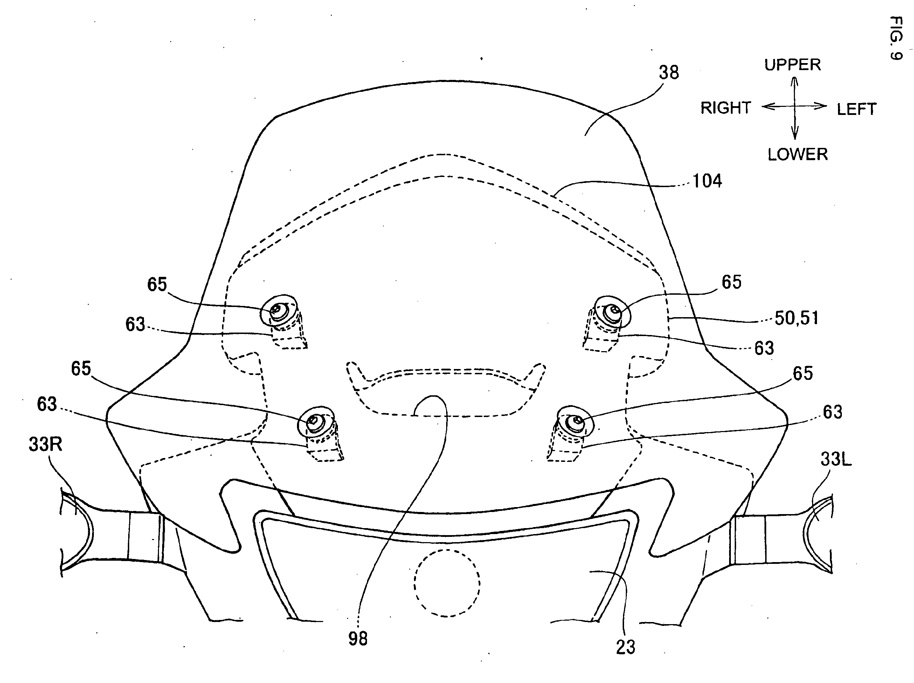

Referring to Fig. 9, the screen 38 is mounted on the screen stay 50 via the four bolts 65. The meter unit (denoted by the reference numeral 55 in Fig. 5) which displays a vehicle running condition is disposed rearwardly of the screen 38. A meter cover 104 for covering a forward area of the meter 55 is integrally formed with an upper portion of the screen stay 50 forwardly of the meter 55. The meter cover 104 is an extension which extends upwardly from an upper end of the screen stay 50.

The meter cover 104 is integrally formed with the upper portion of the screen stay 50. As the screen stay 50 also serves as the meter cover 104, this contributes to a reduced number of parts used.

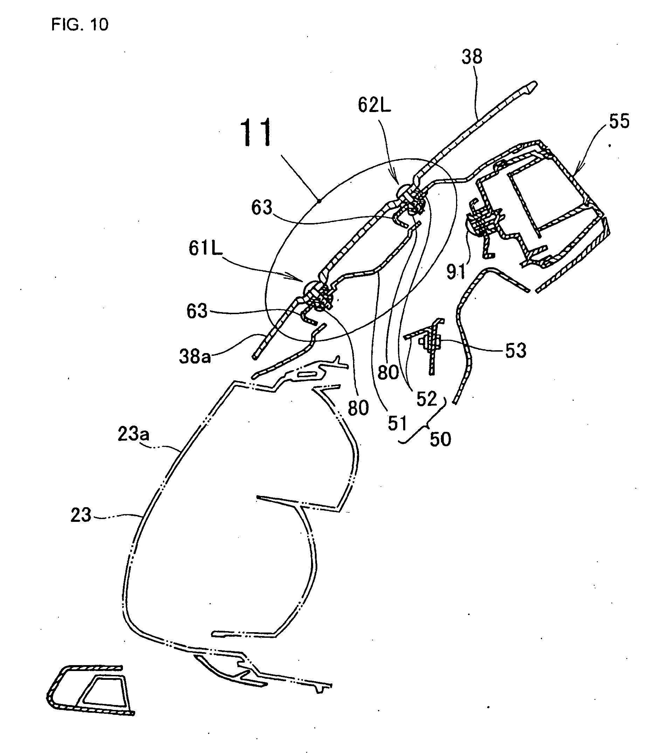

Referring to Fig. 10, the screen stay 50 is formed to include the metal stay base 52 and the resin stay main unit 51 mounted on the stay base 52. The screen 38 is mounted on the first supporting seat portion 61 L disposed on the stay main unit 51 and the second supporting seat portion 62L disposed on the stay base 52. The headlight 23 is disposed downwardly of the screen 38 such that a front surface 23a of the headlight 23 is flush with a front surface 38a of the screen.

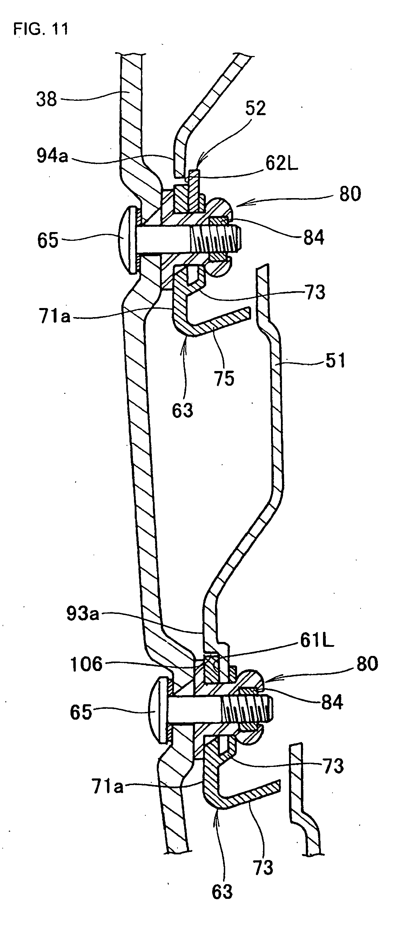

Referring to Fig. 11, the clip member 63 including the collar member 80 is inserted from a downward direction into the first supporting seat portion 61 L disposed on the resin stay main unit 51. In addition, the second supporting seat portion 62L is disposed on the metal stay base 52 and the clip member 63 including the collar member 80 is inserted from a downward direction into the second supporting seat portion 62L.

The screen 38 is brought into abutment with the upper and lower collar members 80, 80 including the upper and lower clip members 63, 63, respectively, from a forward direction of the vehicle. The bolts 65, 65 are tightened in the nuts 84, 84 buried in the clip members 63, 63, respectively, from the forward to rearward direction of the vehicle. This fastens the screen 38 to the stay main unit 51 and the stay base 52.

The stay base 52 is formed of a metal and the stay main unit 51 is formed of a resin. While supporting stiffness of the screen 38 is ensured by the metal stay base 52, the second boss portion 94L disposed on the stay main unit 51 supports the screen 38 so as to prevent the screen 38 from being tilted.

The structure of the first supporting seat portion 61 R and the second supporting seat portion 62R disposed on the right-hand side of the vehicle is the same as the structure of the first supporting seat portion 61 L and the second supporting seat portion 62L, and detailed descriptions of these will be omitted.

Referring back to Fig. 7, the screen stay 50 is the stay main unit 51 to which the metal stay base 52 is fitted from the rearward direction of the vehicle. Specifically, the stay main unit 51 is fitted to the metal stay base 52 from the forward direction of the vehicle, so that the stay main unit 51 covers the stay base 52. Because the stay main unit 51 that covers the stay base 52 is formed of a resin, the stay main unit 51 can be flexibly shaped as compared with the stay base 52. This enhances a degree of freedom in setting its design accordingly.

Referring also to Fig. 11, a front surface 93a of the first boss portion has a shouldered portion 106 that is recessed rearwardly in the vehicle. The first supporting seat portion 61 L is disposed on a surface recessed by the shouldered portion 106. A front surface 71 a of the front plate portion that forms part of the clip member 63 is substantially flush with the front surface 93a of the first boss portion.

The front surface 93a of the first boss portion included in the stay main unit 51 is disposed so as to be substantially flush with the front surface 71 a of the front plate portion (which forms a front surface of the clip member. As compared with an arrangement in which a step is formed between the front surface 71 a of the clip member and the front surface 93a of the first boss portion, the clip member 63 can be made less noticeable, which allows the appearance of the vehicle to be improved.

Effects of the screen mounting structure as described heretofore will be described below.

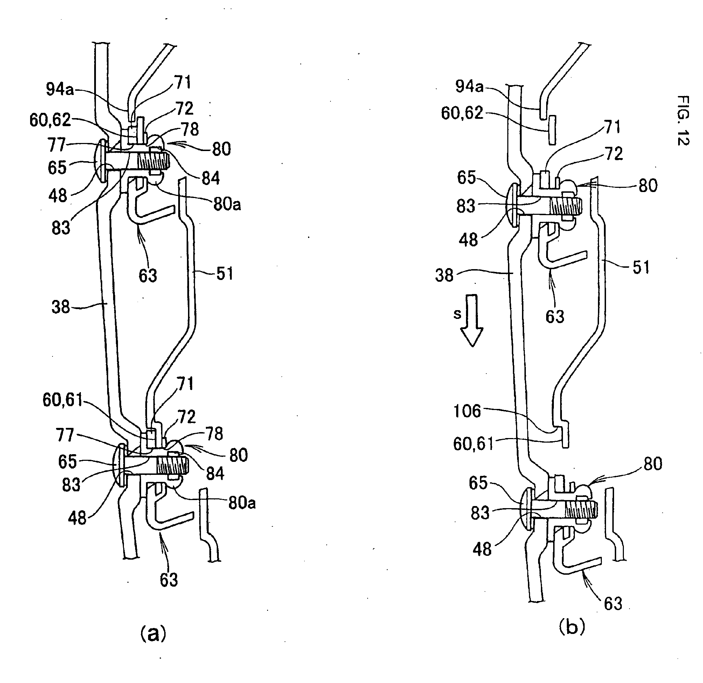

In Fig. 12(a), the clip member 63 is mounted such that the front plate portion 71 and the rear plate portion 72 clamp the supporting seat portion 60 and includes the collar member 80 that penetrates through the front plate portion 71 and the rear plate portion 72.

The screen 38 is mounted on the supporting seat portion 60 as follows. Specifically, the clip member 63 is mounted on the supporting seat portion 60 and the collar member 80 is inserted into the front hole 77 and the rear hole 78, in sequence, in the clip member 63. Next, the screen 38 is abutted on the flange portion 81 of the clip member 63, the bolt 65 is inserted into the bolt hole 83 in the collar member 80, and the bolt 65 is tightened in the nut 84 buried in the collar member 80.

When the bolt 65 is tightened, the distance between the flange portion 81 of the collar main unit 82 and the nut 84 buried in the collar main unit 82 is reduced. At the same time, the portion of the collar main unit 82 in which the nut 84 is buried bulges in a direction perpendicular to the axis of the bolt 65, so that the supporting seat portion 60 is thereby clamped. This fixes the screen 38 onto the supporting seat portion 60.

In Fig. 12(b), when a load of a predetermined value or more is applied downwardly (in a direction of an arrow s) to the screen 38, the screen 38 becomes movable downwardly from the groove portion 69 in the screen stay 50, with the bolt 65 and the clip member 63 integrated with the screen 38.

In the prior art screen mounting structures which allow the screen to be downwardly moved, the screen has an elongate slot made therein and a bolt is passed through an upper end of the slot to fix the screen in the screen stay for possible application of an external force. This structure requires that the slot be formed in the screen as a fastening portion. The slot is covered by, for example, a cover member in order to maintain good appearance.

In contrast, in this embodiment of the present invention, the screen stay 50 has the groove portion 69 that opens downwardly. The clip member 63 and the collar member 80 are disposed in this groove portion 69 and the screen 38 is thereby fastened to the supporting seat portion 60 of the screen stay.

In this embodiment of the present invention, when a predetermined load or more is applied to the screen 38, the screen 38 can be moved downwardly without having to make a slot-like mounting hole 48 in the screen 38. Not requiring a slot leads to an enhanced degree of freedom in design of the screen 38. In addition, the mounting hole 48, which is not a slot, eliminates the need for including, for example, a cover member. This achieves good appearance of the screen mounting portion and areas around it.

The groove portion (reference numeral 69 in Fig. 3) in the screen stay is covered in the cover portion 75 of the clip member. The lower side (reference numeral 68 in Fig. 3) of the supporting seat portion is covered in the cover portion 75. There is therefore no likelihood that appearance of the screen stay 50 and the surrounding area will be impaired. This contributes to better appearance of the vehicle. In addition, a lower portion of the collar main unit 82 can be protected.

A second embodiment of the present invention will now be described.

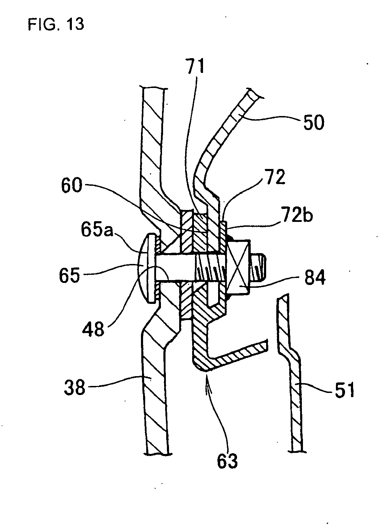

Referring to Fig. 13, a screen mounting structure includes a supporting seat portion 60, disposed on a screen stay 50, for supporting a screen 38, and a clip member 63 mounted on the supporting seat portion 60.

Referring also to Fig. 3, the supporting seat portion 60 has a hole portion 67 through which a bolt 65 is inserted and a groove portion 69 extending from the hole portion 67 to a lower side 68 of the supporting seat portion. Thus, the supporting seat portion 60 of the second embodiment is structured in the same manner as the supporting seat portion 60 of the first embodiment.

The clip member 63 includes a front plate portion 71 and a rear plate portion 72, and has a hole portion 67 and a nut 84. Specifically, the front plate portion 71 abuts on a front surface 60a of the supporting seat portion. The rear plate portion 72 extends from a lower portion of the front plate portion 71 and abuts on a rear surface 60b of the supporting seat portion. The bolt 65 penetrates through the hole portion 67 in the front plate portion 71 and the rear plate portion 72. The nut 84 is fixedly attached to a rear surface 72b of the rear plate portion 72 at a position of the hole portion 67.

The clip member 63 is mounted such that the supporting seat portion 60 is clamped between the front plate portion 71 and the rear plate portion 72. The nut 84 is fixedly attached to the rear surface 72b of the rear plate portion. The bolt is inserted in the hole portion 67 in the clip member 63 and the nut 84 fixed to the rear surface 72b of the rear plate portion is then tightened. This mounts the screen 38 on the screen stay 50.

When the bolt 65 is tightened, a gap between a head 65a of the bolt 65 and the nut 84 fixed to the rear surface 72b of the rear plate portion is narrowed, so that the supporting seat portion 60 and the clip member 63 are clamped, which results in the screen 38 being secured to the supporting seat portion 60.

When a predetermined load or more is applied to the screen 38 downwardly, the screen 38 becomes downwardly movable from the groove portion 69 in the screen stay, with the bolt 65 and the clip member 63 integrated with the screen 38.

In the present invention, the screen stay 50 has the groove portion 69 that opens downwardly, the clip member 63 is disposed in the groove portion 69, and the screen 38 is fastened to the supporting seat portion 60 of the screen stay 50. In this case, the screen 38 can be moved downwardly without having to make a slot-like mounting hole 48 in the screen 38. Not requiring a slot leads to an enhanced degree of freedom in design of the screen 38. In addition, the mounting hole 48, which is not a slot, achieves good appearance of the screen mounting portion and nearby areas without having to include, for example, a cover member.

In addition, a collar member can be eliminated, which promotes reduction in the number of parts used and the number of man-hours required for assembly.

Although the present invention is applied to a motorcycle in the embodiments described heretofore, the present invention may be applied to a three-wheeled saddle riding type vehicle, or any other form of saddle riding type vehicle.

## Claims

1. A saddle riding type vehicle comprising a screen mounting structure with:
a screen stay (50), disposed at a front portion of the vehicle, for supporting a screen (38), the screen stay (50) including a supporting seat portion (60) for supporting the screen (38), the supporting seat portion (60) having a clip member (63) attached thereon, the clip member (63) and the screen (38) being fastened together with a bolt (65) to thereby mount the screen (38) on the screen stay (50), wherein:
the supporting seat portion (60) has a hole portion (67) through which the bolt (65) is passed; and
the clip member (63) includes: a front plate portion (71) abutting on a front surface of the supporting seat portion (60); a rear plate portion (72) abutting on a rear surface of the supporting seat portion (60), the front plate portion (71) and the rear plate portion (72) having a hole portion (77, 78) accepting the bolt (65) that penetrates therethrough; and a nut (84) at a rear surface of the rear plate portion (72);
**characterized in that** the rear plate portion (72) extends from a lower portion of the front plate portion (71), and **in that** the supporting seat portion also has a groove portion (69) extending from the hole portion (67) to a lower side (68) of the supporting seat portion (60) so as to open downwardly, so that when a load of a predetermined value or more is applied downwardly to the screen (38), the screen (38) is adapted to be moved downwardly from the groove portion (69) to go beyond the lower side (68) so as to be dismounted from the screen stay (50), with the bolt (65) and the clip member (63) integrated with the screen (38).

2. A vehicle with a screen mounting structure as claimed in claim 1, wherein:
the clip member (63) further comprises a collar member (80) disposed so as to penetrate through the front plate portion (71) and the rear plate portion (72); and
the collar member (80) is an elastic body and includes a flange portion (81) abutting on the screen (38), a collar main unit (82) extending from the flange portion (81) toward a side of the screen stay (50), a bolt hole (83) penetrating through the collar main unit (82) and the flange portion (81) and accepting the bolt (65) inserted therethrough, and said nut (84) is buried In the collar main unit (82) at an end portion of the bolt hole (83) and accepting the bolt (65) screwed therein.

3. The vehicle with a screen mounting structure according to claim 1 or claim 2, wherein
the clip member (63) includes a cover portion (75), disposed at a lower portion thereof, for covering the lower side (68) of the supporting seat portion (60).

4. The vehicle with a screen mounting structure according to any preceding claim, wherein;
the screen stay (50) includes a stay main unit (51) formed of a resin and a stay base (52) formed of a metal and joined to the stay main unit (51) from a rearward direction of the vehicle;
the stay main unit (51) includes a first boss portion (93) protruding forwardly of the vehicle and having an opening (96L, 96R) which exposes a front portion (92L, 92R) of the stay base (52) and a second boss portion (94) protruding forwardly of the vehicle at a position upward or downward of the first boss portion (93); the supporting seat portion (60) includes a first supporting seat portion (61L, 61R) and a second supporting seat portion (62L, 62R); and
the second boss portion (94) and the front portion (92L, 92R) of the stay base (52) together form the second supporting seat portion (62L, 62R).

5. The vehicle with a screen mounting structure according to claim 4, wherein:
the first boss portion (93) has a front surface (93a), the front surface (93a) having a shouldered portion (106) recessed rearwardly in the vehicle;
the first supporting seat portion (61L, 61R) is disposed on a surface recessed by the shouldered portion (106); and
a front surface (71 a) of the front plate portion (71) that forms part of the clip member (63) is substantially flush with the front surface (93a) of the first boss portion (93).

6. The vehicle with a screen mounting structure according to any preceding claim, wherein:
a meter (55) for displaying a vehicle running condition is disposed rearwardly of the screen (38); and
a meter cover (104) is integrally formed with an upper portion of the screen stay (50) forwardly of the meter (55).

7. The vehicle with a screen mounting structure according to any preceding claim, wherein
the clip member (63) includes a locking protrusion (74) to abut on the lower side (68) of the supporting seat portion (60) and thereby prevent the clip member (63) from being rotated when the bolt (65) is tightened,

## Patentansprüche

1. Fahrzeug vom Sattelfahrtyp, welches eine Montagestruktur für eine Windschutzscheibe umfasst mit:
einer Windschutzscheibenstütze (50), die an einem vorderen Abschnitt des Fahrzeugs angeordnet ist, zum Abstützen einer Windschutzscheibe (38), wobei die Windschutzscheibenstütze (50) einen Stützsitzabschnitt (60) zum Abstützen der Windschutzscheibe (38) aufweist, wobei der Stützsitzabschnitt (60) ein an ihm angebrachtes Klammerelement (63) aufweist, wobei das Klammerelement (63) und die Windschutzscheibe (38) mit einem Bolzen (65) aneinander befestigt sind, um dadurch die Windschutzscheibe (38) auf der Windschutzscheibenstütze (50) zu montieren, wobei:
der Stützsitzabschnitt (60) einen Lochabschnitt (67) aufweist, durch welchen der Bolzen (65) hindurchgeführt ist; und
das Klammerelement (63) aufweist: einen vorderen Plattenabschnitt (71), der an einer vorderen Fläche des Stützsitzabschnitts (60) anliegt; einen hinteren Plattenabschnitt (72), der an einer hinteren Fläche des Stützsitzabschnitts (60) anliegt, wobei der vordere Plattenabschnitt (71) und der hintere Plattenabschnitt (72) einen Lochabschnitt (77, 78) aufweisen, der den Bolzen (65) aufnimmt, welcher durch diesen hindurchführt; und eine Mutter (84) an einer hinteren Fläche des hinteren Plattenabschnitts (72);
**dadurch gekennzeichnet, dass** sich der hintere Plattenabschnitt (72) von einem unteren Abschnitt des vorderen Plattenabschnitts (71) aus erstreckt, und dadurch, dass der Stützsitzabschnitt außerdem einen Nutabschnitt (69) aufweist, der sich von dem Lochabschnitt (67) zu einer Unterseite (68) des Stützsitzabschnitts (60) erstreckt, so dass er sich nach unten öffnet, so dass, wenn eine Last, die einen vorbestimmten Wert hat oder größer als dieser ist, nach unten auf die Windschutzscheibe (38) angewendet wird, die Windschutzscheibe (38) dazu eingerichtet ist, aus dem Nutabschnitt (69) nach unten bewegt zu werden, um sich über die Unterseite (68) hinaus zu bewegen, so dass sie von der Windschutzscheibenstütze (50) demontiert wird, wobei der Bolzen (65) und das Klammerelement (63) mit der Windschutzscheibe (38) verbunden bleiben.

2. Fahrzeug mit einer Montagestruktur für eine Windschutzscheibe nach Anspruch 1, wobei:
das Klammerelement (63) ferner ein Kragenelement (80) umfasst, das so angeordnet ist, dass es den vorderen Plattenabschnitt (71) und den hinteren Plattenabschnitt (72) durchdringt; und
das Kragenelement (80) ein elastischer Körper ist und einen Flanschabschnitt (81) aufweist, der an der Windschutzscheibe (38) anliegt, wobei sich eine Kragenhaupteinheit (82) von dem Flanschabschnitt (81) aus in Richtung einer Seite der Windschutzscheibenstütze (50) erstreckt, wobei ein Bolzenloch (83) durch die Kragenhaupteinheit (82) und den Flanschabschnitt (81) hindurchführt und den durch es hindurch eingesetzten Bolzen (65) aufnimmt, und die Mutter (84) in die Kragenhaupteinheit (82) an einem Endabschnitt des Bolzenloches (83) eingebettet ist und den in sie eingeschraubten Bolzen (65) aufnimmt.

3. Fahrzeug mit einer Montagestruktur für eine Windschutzscheibe nach Anspruch 1 oder Anspruch 2, wobei
das Klammerelement (63) einen Abdeckungsabschnitt (75) aufweist, der an einem unteren Abschnitt desselben angeordnet ist, zum Abdecken der Unterseite (68) des Stützsitzabschnitts (60).

4. Fahrzeug mit einer Montagestruktur für eine Windschutzscheibe nach einem der vorhergehenden Ansprüche, wobei:
die Windschutzscheibenstütze (50) eine Stützenhaupteinheit (51) aufweist, die aus einem Kunstharz ausgebildet ist, und eine Stützenbasis (52), die aus einem Metall ausgebildet ist und mit der Stützenhaupteinheit (51) von einer Rückwärtsrichtung des Fahrzeugs aus verbunden ist;
die Stützenhaupteinheit (51) einen ersten Vorsprungsabschnitt (93) aufweist, der von dem Fahrzeug nach vorn vorsteht und eine Öffnung (96L, 96R) aufweist, welche einen vorderen Abschnitt (92L, 92R) der Stützenbasis (52) freilegt, und einen zweiten Vorsprungsabschnitt (94), der von dem Fahrzeug an einer Position oberhalb oder unterhalb des ersten Vorsprungsabschnitts (93) nach vorn vorsteht; wobei der Stützsitzabschnitt (60) einen ersten Stützsitzabschnitt (61L, 61R) und einen zweiten Stützsitzabschnitt (62L, 62R) aufweist; und
der zweite Vorsprungsabschnitt (94) und der vordere Abschnitt (92L, 92R) der Stützenbasis (52) zusammen den zweiten Stützsitzabschnitt (62L, 62R) bilden.

5. Fahrzeug mit einer Montagestruktur für eine Windschutzscheibe nach Anspruch 4, wobei:
der erste Vorsprungsabschnitt (93) eine vordere Fläche (93a) aufweist, wobei die vordere Fläche (93a) einen abgesetzten Abschnitt (106) aufweist, der in dem Fahrzeug nach hinten zurückgesetzt ist;
der erste Stützsitzabschnitt (61L, 61R) auf einer Fläche angeordnet ist, die durch den abgesetzten Abschnitt (106) zurückgesetzt ist; und
eine vordere Fläche (71a) des vorderen Plattenabschnitts (71), welcher einen Teil des Klammerelements (63) bildet, im Wesentlichen mit der vorderen Fläche (93a) des ersten Vorsprungsabschnitts (93) bündig ist.

6. Fahrzeug mit einer Montagestruktur für eine Windschutzscheibe nach einem der vorhergehenden Ansprüche, wobei:
ein Messinstrument (55) zum Anzeigen eines Fahrzeugfahrzustands an der Rückseite der Windschutzscheibe (38) angeordnet ist; und
eine Messinstrumentabdeckung (104) mit einem oberen Abschnitt der Windschutzscheibenstütze (50) an der Vorderseite des Messinstruments (55) einstückig ausgebildet ist.

7. Fahrzeug mit einer Montagestruktur für eine Windschutzscheibe nach einem der vorhergehenden Ansprüche, wobei:
das Klammerelement (63) einen Verriegelungsvorsprung (74) aufweist, der dazu bestimmt ist, an der Unterseite (68) des Stützsitzabschnitts (60) zur Anlage zu kommen und dadurch zu verhindern, dass das Klammerelement (63) gedreht wird, wenn der Bolzen (65) festgezogen wird.

## Revendications

1. Véhicule de type à selle, comprenant une structure de montage de pare-brise comprenant :
un appui de pare-brise (50), disposé sur une portion frontale du véhicule, pour supporter un pare-brise (38), l'appui de pare-brise (50) comprenant une portion de siège de support (60) pour supporter le pare-brise (38), la portion de siège de support (60) ayant un élément de serrage (63) qui lui est fixé, l'élément de serrage (63) et le pare-brise (38) étant assujettis ensemble par un boulon (65) afin de monter de la sorte le pare-brise (38) sur l'appui de pare-brise (50), dans lequel :
la portion de siège de support (60) présente une portion de trou (67) à travers laquelle le boulon (65) est passé ; et
l'élément de serrage (63) comprend une portion de plaque frontale (71) s'appuyant sur une surface frontale de la portion de siège de support (60) ; une portion de plaque arrière (72) s'appuyant sur une surface arrière de la portion de siège de support (60), la portion de plaque avant (71) et la portion de plaque arrière (72) ayant une portion de trou (77, 78) recevant le boulon (65) qui passe à travers ; et un écrou (84) sur une surface arrière de la portion de plaque arrière (72) ;
**caractérisé en ce que** la portion de plaque arrière (72) s'étend d'une portion inférieure de la portion de plaque avant (71) et **en ce que** la portion de siège de support a également une portion de rainure (69) s'étendant de la portion de trou (67) à un côté inférieur (68) de la portion de siège de support (60) de manière à déboucher vers le bas de sorte que, lorsqu'une charge d'une valeur prédéterminée ou plus est appliquée vers le bas sur le pare-brise (38), celui-ci (38) soit à même de se déplacer vers le bas depuis la portion de rainure (69) pour passer au-delà du côté inférieur (68) de manière à être démonté de l'appui de pare-brise (50), le boulon (65) et l'élément de serrage (63) étant intégrés au pare-brise (38).

2. Véhicule comportant une structure de montage de pare-brise selon la revendication 1, dans lequel :
l'élément de serrage (63) comprend en outre un élément en collerette (80) disposé de manière à pénétrer à travers la portion de plaque avant (71) et la portion de plaque arrière (72) ; et
l'élément en collerette (80) est un corps élastique et comprend une portion bridée (81) s'appuyant sur le pare-brise (38), une unité principale de collerette (82) s'étendant depuis la portion bridée (81) vers un côté de l'appui de pare-brise (50), un trou de boulon (83) pénétrant à travers l'unité principale de collerette (82) et la portion bridée (81) et recevant le boulon (65) qui y est inséré, et ledit écrou (84) est noyé dans l'unité principale de collerette (82) au niveau d'une portion d'extrémité du trou de boulon (83) et recevant le boulon (65) qui y est vissé.

3. Véhicule comprenant une structure de montage de pare-brise selon la revendication 1 ou la revendication 2, dans lequel :
l'élément de serrage (63) comprend une portion couvrante (75) disposée dans sa portion inférieure pour recouvrir le côté inférieur (68) de la portion de siège de support (60).

4. Véhicule comprenant une structure de montage de pare-brise selon l'une quelconque des revendications précédentes, dans lequel :
l'appui de pare-brise (50) comprend une unité d'appui principale (51) formée d'une résine et une base d'appui (52) formée d'un métal et jointe à l'unité d'appui principale (51) à partir d'une direction arrière du véhicule ;
l'unité d'appui principale (51) comprend une première portion de bossage (93) faisant saillie vers l'avant du véhicule et ayant une ouverture (96L, 96R) qui expose une portion avant (92L, 92R) de la base d'appui (52) et une seconde portion de bossage (94) saillant vers l'avant du véhicule dans une position ascendante ou descendante de la première portion de bossage (93) ; la portion de siège de support (60) comprenant une première portion de siège de support (61L, 61R) et une seconde portion de siège de support (62L, 62R) ; et
la seconde portion de bossage (94) et la portion avant (92L, 92R) de la base d'appui (52) forment conjointement la seconde portion de siège de support (62L, 62R).

5. Véhicule comprenant une structure de montage de pare-brise selon la revendication 4, dans lequel :
la première portion de bossage (93) présente une surface avant (93a), la surface avant (93a) ayant une portion en épaulement (106) évidée à l'arrière du véhicule ;
la première portion de siège de support (61L, 61R) est disposée sur une surface évidée par la portion d'épaulement (106) ; et
une surface avant (71a) de la portion de plaque avant (71) qui fait partie de l'élément de serrage (63) est sensiblement de niveau avec la surface avant (93a) de la première portion de bossage (93).

6. véhicule comprenant une structure de montage de pare-brise selon l'une quelconque des revendications précédentes, dans lequel :
un dispositif de mesure (55) pour afficher un état de fonctionnement du véhicule est disposé à l'arrière du pare-brise (38) ; et
un couvercle de dispositif de mesure (104) est formé d'une seule pièce avec une portion supérieure de l'appui de pare-brise (50) à l'avant du dispositif de mesure (55).

7. Véhicule comprenant une structure de montage de pare-brise selon l'une quelconque des revendications précédentes, dans lequel :
l'élément de serrage (63) comprend une saillie de verrouillage (74) pour s'appuyer sur le côté inférieur (68) de la portion de siège de support (60) et empêcher ainsi l'élément de serrage (63) de tourner lorsque le boulon (65) est serré.
